(19) Europäisches Patentamt
European Patent Office
Office européen des brevets

(11) Numéro de publication: **0 190 116**
**B1**

# (12) FASCICULE DE BREVET EUROPÉEN

(45) Date de publication du fascicule du brevet: **29.03.89**

(51) Int. Cl.⁴: **B 01 D 53/02**, C 10 K 1/20

(21) Numéro de dépôt: **86870006.3**

(22) Date de dépôt: **16.01.86**

(54) **Masse adsorbante pour la désulfuration des gaz.**

(30) Priorité: **22.01.85 BE 214368**

(43) Date de publication de la demande:
**06.08.86 Bulletin 86/32**

(45) Mention de la délivrance du brevet:
**29.03.89 Bulletin 89/13**

(84) Etats contractants désignés:
**AT BE CH DE FR GB IT LI LU NL SE**

(56) Documents cité:
**DE-A-952 022**
**FR-A-2 073 573**
**GB-A-585 080**
**GB-A-943 672**

**SOVIET INVENTIONS ILLUSTRATED, vol. 885, 24 novembre 1986, no. 87539 E/41, Derwent Publications, Londres, GB; & SU - 889 063 (NIZHNEVOLZHSK GEOL) 17-12-1981**

(73) Titulaire: **Bollen, Marcel, Route de Bolland, 27, B-4650 Herve (BE)**

(72) Inventeur: **Bollen, Marcel, Route de Bolland, 27, B-4650 Herve (BE)**

(74) Mandataire: **Fobe, Edouard, Bureau VANDER HAEGHEN 63, Avenue de la Toison d'Or, B-1060 Bruxelles (BE)**

**EP 0 190 116 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1989

**Description**

La présente invention est relative à un procédé pour préparer une masse adsorbante finement divisée prête à être mise en oeuvre pour purifier par adsorption un courant gazeux contenant des dérivés sulfureux et/ou cyanurés et contenant 82 à 92 % en poids de $Fe(OH)_3$ sur base de matière sèche.

Elle trouve sa principale application dans la purification des gaz de cokerie par élimination des acides sulfhydrique et cyanhydrique et de dérivés ammoniacaux avant stockage, la désulfuration du gaz naturel et de gaz de pétrole, la purification des gaz de hauts fourneaux, et la désodorisation d'effluents gazeux chargés de mercaptans.

On connaît un procédé relativement ancien pour traiter du gaz d'éclairage dans des caissons d'épuration et en particulier pour éliminer l'hydrogène sulfuré, l'acide cyanhydrique et les sels d'ammonium d'un courant gazeux en lui faisant traverser une masse adsorbante, appelée Lux-masse et disposée en lit fixe.

La Lux-masse est obtenue comme sous-produit dans un procédé ancien de fabrication d'oxyde d'aluminium par calcination d'un mélange de beauxite, de soude et de chaux à une température de 900°C dans un four à tambour rotatif. L'oxyde d'aluminium présent dans le beauxite est transformé en aluminate de sodium soluble dans l'eau et en oxyde de fer. Par extraction à la soude de ces composés sodiques, on transforme l'oxyde de fer en hydroxyde de fer ferrique et obtient un résidu basique constitué de chaux, de sulfate ferreux et d'hydroxyde de fer ferrique $Fe(OH)_3$ susdit.

La masse adsorbante ainsi obtenue présente une bonne réactivité à l'encontre de l'hydrogène sulfuré. Elle a fait l'objet de nombreux perfectionnements en vue d'en améliorer la texture poreuse et est commercialisée sous le nom de Lux-masse E ®.

En raison de l'abandon du procédé thermique, pour des raisons de rentabilité et de son remplacement par le procédé BAYER plus performant également aux dépens de beauxite, on a cherché à préparer des masses adsorbantes analogues à partir d'autres résidus de fer, en particulier à partir de résidu de fer.

Ainsi, le document GB-A-585 080 décrit un procédé pour traiter un résidu d'oxyde de fer épuisé tels que des copeaux de fraisage à l'aide de saumures résiduaires contenant de la chaux, de la soude ou du carbonate de soude jusqu'à l'obtention d'un pH compris entre 12 et 15.

Le mélange traité est intimement mélangé et filtré dans un filtre presse de manière à réduire l'humidité à 40 - 45 %.

La gâteau de filtration est séché à l'air pour donner un produit dans lequel de l'hydroxyde de fer ferreux hydraté active l'oxyde de fer ferrique, ayant des propriétés similaires à celles d'une Lux-masse®.

On a aussi cherché à préparer une masse adsorbante à partir du résidu provenant de la réduction de dérivés nitrés à l'aide de limaille de fer par le procédé BECHAMP, plus particulièrement de la fabrication de l'aniline.

Ainsi la masse adsorbante développée par GIULINI CHEMIE GmbH et décrite dans le document allemand DE-B-2 845 725 présente une excellente réactivité vis-à-vis des acides sulfhydrique et cyanhydrique et des dérivés ammoniacaux.

Ce procédé présente néanmoins de graves inconvénients qui le rendent peu ou pas rentable. En effet, au fur et à mesure que la masse adsorbante répartie en couches successives sur une série de plateaux dans un caisson ou une tour d'adsorption, se charge d'hydrogène sulfuré et d'acide cyanhydrique, elle se transforme en une masse compacte de plus en plus dure. Lorsque la masse adsorbante est saturée, il devient pratiquement impossible de décharger la tour d'adsorption sans mettre en oeuvre des outils de percussion, tels que marteaux pneumatiques.

En outre, le produit de réaction constitué de la masse adsorbante usée, composée essentiellement de sulfure de fer et de ferrocyanure trouvait son principal débouché dans la fabrication du Bleu de Prusse. Or, le ferrocyanure a perdu en importance ces dernières années dans la fabrication de colorants, ce qui rend le procédé moins attrayant.

La présente invention vise à remédier au mode de préparation coûteux de la masse adsorbante à partir de résidus qui ne peuvent être considérés à vrai dire comme déchets. Les limailles, tournures ou copeaux de fer ou d'acier ont une certaine valeur marchande puisqu'ils peuvent être vendus comme mitraille et recyclés dans un haut fourneau.

L'invention propose un procédé mettant en oeuvre comme matière de départ les déchets d'une station d'épuration des eaux provenant d'une installation de décapage de l'acier. Elle permet donc de revaloriser des déchets qui, jusqu'à présent, ne pouvaient être que déversés sur un dépôt d'immondices. Elle permet également de préparer une masse adsorbante qui ne se compacte pas et qui se laisse facilement éliminer des tours d'adsorption alors que toutes les masses adsorbantes connues à ce jour nécessitent de gros efforts, notamment l'emploi d'un marteau pneumatique pour désagréger et enlever la masse adsorbante usée. La présente invention est relative à un procédé pour préparer une masse adsorbante finement divisée prête à être mise en oeuvre pour purifier par adsorption un courant gazeux contenant des dérivés sulfureux et/ou cyanurés et contenant 82 à 92 % en poids de $Fe(OH)_3$ sur base de matière sèche, essentiellement caractérisée en ce qu'on neutralise à la chaux à un pH compris entre 6 et 9 une solution acide aqueuse résiduaire provenant du décapage et du dépoussiérage de l'acier par voie humide en présence d'acide chlorhydrique, de manière à obtenir une suspension de chlorure de fer ferreux que l'on sépare par décantation et filtration dans une station d'épuration des eaux traditionnelle, en vue d'obtenir un gâteau que l'on soumet à une oxydation à l'air.

L'invention concerne également un procédé de purification par adsorption dans lequel on utilise la masse adsorbante obtenue par le procédé susdit dans une colonne d'adsorption en lit fixe.

Dans un mode de mise en oeuvre particulier on utilise la masse adsorbante susdite sous forme d'une suspension aqueuse dans laquelle on fait barboter les gaz à purifier.

D'autres particularités et détails de l'invention apparaîtront au cours de la description détaillée suivante faisant référence aux dessins ci-annexés qui illustrent un mode de mise en oeuvre de l'invention, donné à titre d'exemple non limitatif.

Dans ces dessins:

- la figure 1 illustre de manière schématique la préparation de la masse adsorbante dans une station d'épuration classique;
- la figure 2 montre une tour d'adsorption garnie de masse adsorbante;
- la figure 3 est un diagramme montrant l'évolution de la quantité de $H_2S$ adsorbée dans la masse adsorbante en fonction de la progression de le désulfuration, et
- la figure 4 montre un appareillage utilisé en laboratoire pour déterminer les performances d'une masse adsorbante.

Dans ces figures les mêmes notations de référence désignent des éléments identiques ou analogues.

Avant d'effectuer sur une surface métallique un traitement de surface quelconque, tel par exemple un dépôt électrolytique, métallisation, étamage ou peinturage, il est indispensable de nettoyer celle-ci en la débarrassant des oxydes qui la recouvrent.

Dans une aciérie, un décapage est effectué sur les brames et les tôles afin d'éviter la formation d'incrustations au cours du planage, de l'étirage ou du profilage.

Une des méthodes les plus répandues pour préparer préalablement le fer ou l'acier est le décapage à l'acide chlorhydrique par immersion, durant quelques minutes, généralement à froid, dans un bain d'acide dilué 1, suivi d'un abondant rinçage à l'eau 2.

La concentration en acide est définie en fonction des produits à enlever et de leur épaisseur. On supprime ainsi la pellicule d'oxyde qui gêne les traitements ultérieurs.

L'attaque acide produit un abondant dégagement d'hydrogène qui risque d'être adsorbé par le métal. Pour réduire ce dégagement on introduit dans le bain de décapage des inhibiteurs d'attaque.

Au cours du décapage le bain d'acide s'épuise progressivement sous la formation d'un sel de chlorure de fer III, le $FeCl_3$.

Contrairement au document allemand DE-B-2 845 725 qui préconise la dégradation thermique de l'hexahydrate de chlorure de fer ferrique, le procédé suivant la présente invention prévoit plutôt, comme illustré à la figure 1, la neutralisation en 3, de la solution acide de chlorure de fer ferrique provenant du réservoir 4, à l'aide de chaux à un pH compris entre 6 et 9, une solution acide aqueuse résiduaire provenant du décapage et du dépoussiérage de l'acier par voie humide, en présence d'acide chlorhydrique, de manière à obtenir une suspension 5 de chlorure de fer ferreux que l'on sépare par décantation 6 et filtration 7 dans une station d'épuration désignée dans son ensemble par le signe de référence 8, en vue d'obtenir un gâteau 9, qui subit ensuite une oxydation à l'air 10 et que l'on utilise tel quel pour la désulfuration des gaz.

On utilise avantageusement la masse adsorbante susdite dans une colonne d'adsorption en lit fixe.

On a effectué une étude comparative de la capacité d'adsorption d'hydrogène sulfuré de la masse adsorbante suivant la présente invention et d'un produit connu.

Dans chacun de ces essais, un courant gazeux constitué de 96.96 vol % de méthane et de 3.04 vol % de sulfure d'hydrogène est forcé de s'écouler dans une tour d'adsorption contenant la masse adsorbante préparée suivant le procédé décrit ci-dessus, sans adjonction d'autres produits et répartie uniformément sur toute la section de la tour.

Un conduit de sortie de la tour d'adsorption est relié à un barboteur contenant une quantité connue de cuivre sous forme de sulfate;

De cette manière, la totalité de l'hydrogène sulfuré s'échappant de la tour d'adsorption provoque la précipitation d'une quantité équivalente de sulfure de cuivre.

En fin d'opération ou purge l'appareillage en faisant circuler un courant de dioxyde de carbone au travers de celui-ci de manière à entraîner vers le barboteur l'hydrogène sulfuré non adsorbé.

La masse adsorbante, récupérée par filtration et soumise à une oxydation á l'air, peut être utilisée telle quelle sans produits d'addition. Un échantillon de 100 g prélevé dans le gâteau de filtre soumis á l'oxydation pendant 2 jours contient 60 à 65 % d'eau. Après séchage à 105°C suffisamment long que pour obtenir un poids constant, l'échantillon présente la composition suivante:

| | | | |
|---|---|---|---|
| Fe | 43 à 98 % | $Fe(ON_3)$ | = 82 à 92 % |
| Ca O | 1 à 6 % | | |
| Cl | 5 à 10 % | | |
| $SO_4$ | 0,5 à 0,9 % | | |
| Poids spécifique apparent (vrac) | | 0,85 | |

L'adsorption chimique de l'hydrogène sulfuré sur la masse adsorbante composée essentiellement d'hydroxyde ferrique, et qui permet la désulfuration des gaz se réalise selon le schéma réactionnel suivant:

$2\,Fe(OH)_3 + 3H_2S \rightleftarrows 2\,Fe\,S + S + 6\,H_2O$

suivant cette équation:

213,74 g de $Fe(OH)_3$ captent 96,19 g de soufre.

Cette réaction est bien connue et utilisée dans ce but depuis très longtemps.

L'originalité du procédé réside plutôt à la fois dans la réactivité meilleure du produit mis en oeuvre et subsidiairement dans la façon de l'utiliser.

L'utilisation de l'hydroxyde de fer pour la désulfuration de gaz, constitue un mode de valorisation d'un déchet dont une industrie cherche à se débarrasser, il est dès lors disponible à un faible coût.

Sa teneur en hydroxyde de fer est très élevée ce qui confère une grande capacité d'absorption du soufre.

Sa grande réactivité, qui résulte sans doute du traitement subi, lors de l'oxydation de l'état ferreux à l'état ferrique, permet d'obtenir dans le gaz traité, des teneurs résiduaires en sulfure d'hydrogène extrêmement basses, pour autant que le gaz traité ne contiennent pas trop d'hydrogène. Ces teneurs en $H_2s$ inférieures à 0,01 ppm dans les gaz traités, ont été obtenues.

**Essai N° 1**

Une colonne d'adsorption contient 5 g de masse adsorbante prélevés dans un gâteau de filtre soumis pendant deux jours à l'oxydation de l'air et contenant 0,5 g de sciure de bois, 0,5 g de chaux et 1 $cm^3$ d'eau pour humidifier la masse obtenue.

Après le passage de 15.815 ml de gaz susdit, on observe une précipitation de 55 mg de cuivre, ce qui correspond à 0,029 équivalent de $H_2S$ 84.9 %.

Suivant une particularité de l'invention, on utilise la masse adsorbante susdite sous forme d'une suspension aqueuse dans laquelle on fait barboter les gaz à purifier.

La masse adsorbante suivant l'invention présente une réactivité bien supérieure à celle de n'importe quel produit connu.

L'adsorption de l'hydrogène sulfuré est rapide et complète aussi longtemps que la suspension de la masse adsorbante présente une coloration rouge correspondant à celle de la limonite.

Ce mode de mise en oeuvre se caractérise par la facilité par laquelle la masse adsorbante fraîche est mise en place dans l'appareillage avant l'opération d'épuration et par laquelle la masse adsorbante épuisée peut être enlevée en fin d'opération

Le chargement et le déchargement du réacteur sont extrêmement aisés et ne nécessitent pratiquement pas de main d'oeuvre, une pompe y suffit.

On réduit ainsi nettement les frais de manutention puisqu'on évite que la masse adsorbante ne prenne prise dans la tour d'adsorption.

L'accessibilité de l'hydroxyde ferrique par l'$H_2S$ est excellente. La dispersion du solide dans l'eau facilite les transferts de matières. Grâce à la grande aire interfaciale liquide/solide, d'excellents coefficients de transfert sont obtenus. La dispersion dans l'eau contribue à la bonne réactivité chimique du solide.

La quantité de soufre que l'on peut récupérer est plus élevée que celle que l'on peut éliminer par voie sèche dans une tour d'adsorption 11 telle qu'illustrée à la figure 2 où la masse adsorbante 12 est répartie en couches successives sur une série de paires de plateaux 13,13', 14,14' et 15,15'.

**Essai N° 2**

Le gaz à récupérer présente la même composition volumique que dans l'essai précédent: 96.96 % de $CH_4$ et 3.04 % de $H_2S$.

La masse adsorbante se présente sous la forme d'un gâteau contenant 30 % de matière sèche, dont 90 % c'est-à-dire 27 % par rapport au poids total de $Fe(OH)_3$, et 70 % d'eau.

Ce gâteau est mis en suspension dans les proportions suivantes:

| | |
|---|---|
| masse adsorbante | 250 g soit 75 g de matière sèche dont 67.5 g de $Fe(OH)_3$ |
| chaux | 10 g $Ca(OH)_2$ |
| eau | 411 g |

La quantité de soufre adsorbable théoriquement s'élève à 30.38 g.

L'essai est réalisé à une température ambiante de 18°C. Le tableau I donne l'évolution de la concentration d'$H_2S$ à la sortie de la colonne d'adsorption au cours de l'essai N° 2 effectué avec un débit moyen de gaz d'environ 32 litres par heure. Ce tableau est traduit graphiquement par le diagramme de la figure 3. L'appareillage utilisé en laboratoire est illustré à la figure 4. Il comprend une source de méthane et

d'hydrogène sulfuré 16 et de gaz de dilution 17, dosés à l'aide de débitmètres 18. Le mélange à traiter est conduit dans des barboteurs 19 et 20 et un compteur volumétrique 21. Une partie du débit de gaz traité est prélevé via un débitmètre 22 vers un chromatographe 29.

**Tableau I**
Résultat des mesures de l'essai N° 2

| Temps s | Volume total de gaz traité l | Débit instantané l/h | Concentration $H_2S$ à la sortie de la col. d'absorption 20 Vol. % | Quantité cumulée de soufre absorbé g | Rendement % |
|---|---|---|---|---|---|
| 0 | 0 | - | 0 | 0 | 100 |
| 3660 | 26 | 25.57 | 0 | 1,2 | 100 |
| 7740 | 59,5 | 29.65 | 0 | | 100 |
| 11160 | 87,5 | 29.47 | 0 | | 100 |
| 14700 | 116,5 | 29.59 | 0 | | 100 |
| 18180 | 144,5 | 28.87 | 0 | | 100 |
| 21720 | 173 | 29.08 | 0 | | 100 |
| 25260 | 201 | 28.57 | 0 | | 100 |
| 28800 | 238 | 37.76 | 0 | | 100 |
| 31140 | 262 | 36.92 | 0 | 11,40 | 100 |
| 31680 | 267,5 | 36.67 | * traces | 11,64 | 100 |
| 32820 | 280 | 39.06 | * traces | 12,18 | 99,5 |
| 33420 | 286,5 | 38.24 | 0,038 | 12,46 | 99,5 |
| 34080 | 293 | 36.11 | 0,077 | 12,74 | 99 |
| 34680 | 299,8 | 40 | 0,076 | 13,03 | 97 |
| 35220 | 305 | 34.67 | 0,087 | 13,25 | 97 |
| 36420 | 311,5 | 19.70 | 0,094 | 13,52 | 96,9 |
| 37020 | 318 | 38.24 | 0,276 | 13,78 | 90,9 |

Ce procédé suivant l'invention n'exige pas l'adjonction d'activateur ni la mise en oeuvre d'aucun appareillage particulier, même pas celui d'un mélangeur.

L'utilisation d'une suspension en lieu et place d'un lit fixe permet d'éviter les bouchages par suite du dépit des poussières et des vésicules dont le gaz à épurer est souvent chargé.

La perte de charge est très faible car elle est limitée à la hauteur hydrostatique qui peut être faible en raison de la grande réactivité de l'absorbant.

En phase liquide, on n'observe aucune augmentation de la perte de charge due à la formation de soufre élémentaire au cours de l'opération de désulfuration.

L'ajout de suspension fraîche en continu, accompagné du retrait d'une quantité équivalente de suspension usée en vue d'une régénération, permet un fonctionnement en continu avec une activité de désulfuration constante.

On peut éventuellement prévoir la régénération des suspensions saturées de soufre; elle peut se faire par transfert dans une cuve de régénération ou il suffit de faire barboter de l'air et de récupérer le soufre après fusion et décantation. La régénération peut même avoir lieu dans le réacteur d'absorption; il suffit alors de prévoir une batterie d'au moins deux absorbeurs fonctionnant de façon cyclique pour assurer une marche continue.

Le procédé permet en plus de valoriser un produit qui, jusqu'à ce jour n'avait aucune application industrielle et devait être éliminé par déversage.

## Revendications

1. Procédé pour préparer une masse adsorbante finement divisée, prête à être mise en oeuvre pour purifier par adsorption un courant gazeux contenant des dérivés sulfureux et/ou cyanurés et contenant 82 à 92 % en poids de $Fe(OH)_3$ sur base de matière sèche, caractérisé en ce qu'on neutralise à la (en (3)) à un pH compris entre 6 et 9 une solution acide aqueuse résiduaire provenant du décapage et du dépoussiérage de l'acier par voie humide en présence d'acide chlorhydrique, de manière à obtenir une suspension de chlorure de fer ferreux (5) que l'on sépare par décantation (6) et filtration (7) dans une station d'épuration (8) en vue d'obtenir un gâteau (9) que l'on soumet à une oxydation à l'air (10).

2. Procédé de purification d'un courant gazeux par adsorption, caractérisé en ce qu'on utilise une masse adsorbante obtenue par le procédé selon la revendication 1, en lit fixe.

3. Procédé de purification d'un courant gazeux par adsorption, caractérisé en ce qu'on utilise une masse adsorbante obtenue par le procédé selon la revendication 1, sous forme d'une suspension aqueuse dans laquelle on fait barboter les gaz à purifier.

**Patentansprüche**

1. Verfahren zum Herstellen einer gebrauchsfertigen, fein zerteilten Adsorptionsmasse zum Reinigen eines Schwefel- und/oder Cyanderivate enthaltenden Gasstromes, der 82 bis 92 Gew.-% $Fe(OH)_3$, bezogen auf Trockenmasse, enthält, durch Adsorption, dadurch gekennzeichnet, daß man eine saure wässerige Abfallösung, die vom Dekapieren und Entstauben von Stahl stammt, (in (3)) bei einem pH zwischen 6 und 9 mit Kalk in Anwesenheit von Salzsäure naß neutralisiert, um eine Suspension von Eisen(II)chlorid (5) zu erhalten, die in einer Kläranlage (8) durch Dekantieren (6) und Filtrieren (7) abgetrennt wird, um einen Kuchen (9) zu erhalten, der einer Oxidation mit Luft (10) unterworfen wird.

2. Verfahren zum Reinigen eines Gasstromes durch Adsorption, dadurch gekennzeichnet, daß man eine Adsorptionsmasse erhalten durch das Verfahren nach Anspruch 1, in einem Festbett verwendet.

3. Verfahren zum Reinigen eines Gasstromes durch Absorption, dadurch gekennzeichnet, daß man eine Adsorptionsmasse, erhalten durch das Verfahren nach Anspruch 1, in Form einer wässerigen Suspension verwendet, durch welche man das zu reinigende Gas durchströmen läßt.

**Claims**

1. Process for preparing a finely divided adsorbent mass ready to be used for purifying by adsorption a gaseous stream containing sulphurous and/or cyanide derivatives and containing 82 to 92 % by weight of $Fe(OH)_3$ on a dry matter basis, characterized in that lime is used (in (3)) to neutralize to a pH of between 6 and 9 a residual aqueous acidic solution originating from the descaling and dedusting of steel by a wet route in the presence of hydrochloric acid, so as to obtain a suspension of ferrous iron chloride (5) which is separated by settling (6) and filtration (7) in a purification station (8) in order to obtain a cake (9) which is subjected to an oxidation with air (10).

2. Process for purifying a gaseous stream by adsorption, characterized in that an adsorbent mass obtained by the process according to Claim 1 is employed in a fixed bed.

3. Process for purifying a gaseous stream by adsorption, characterized in that an adsorbent mass obtained by the process according to Claim 1 is employed in the form of an aqueous suspension through which the gases to be purified are bubbled.

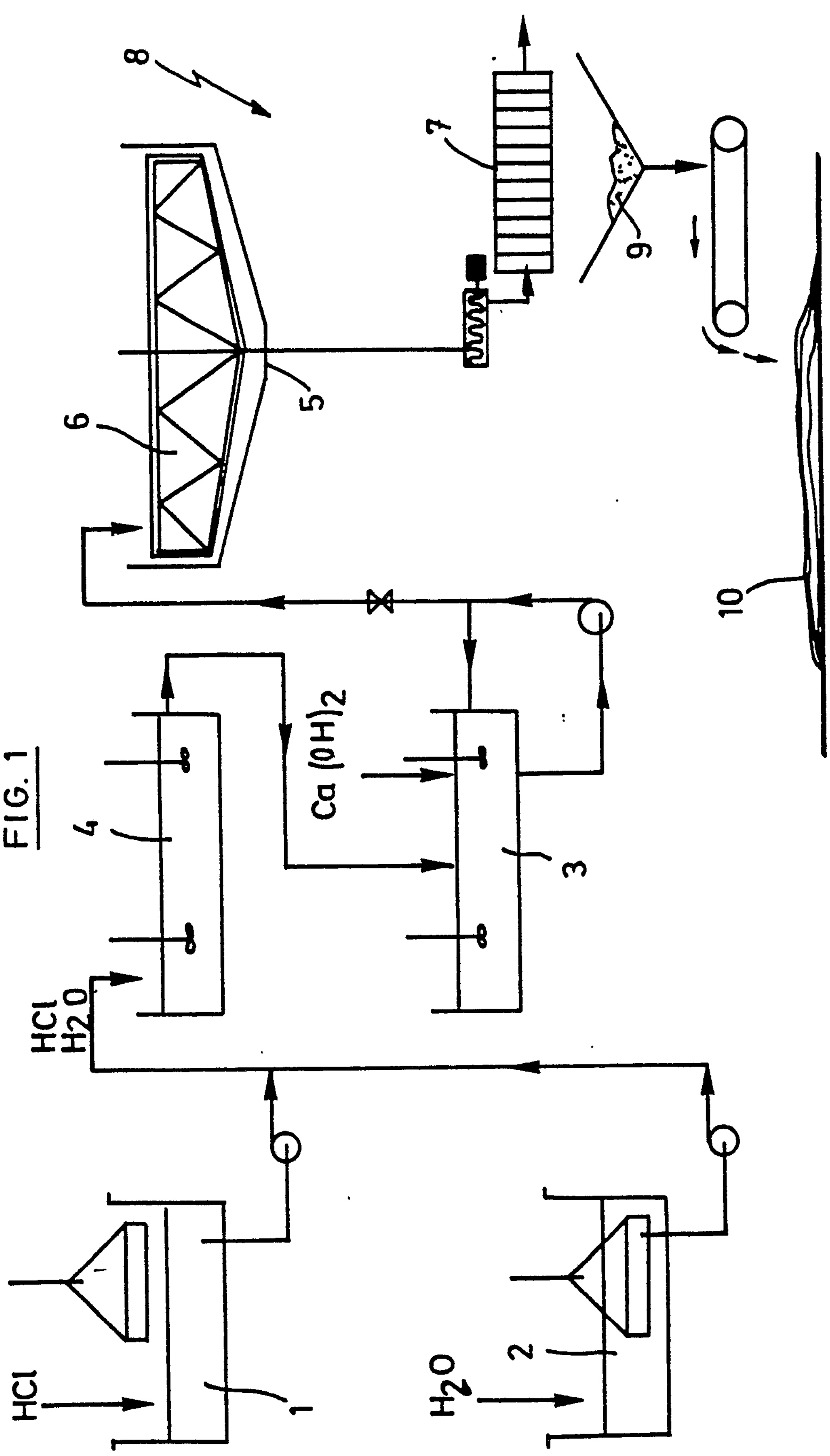


FIG. 1

FIG. 2

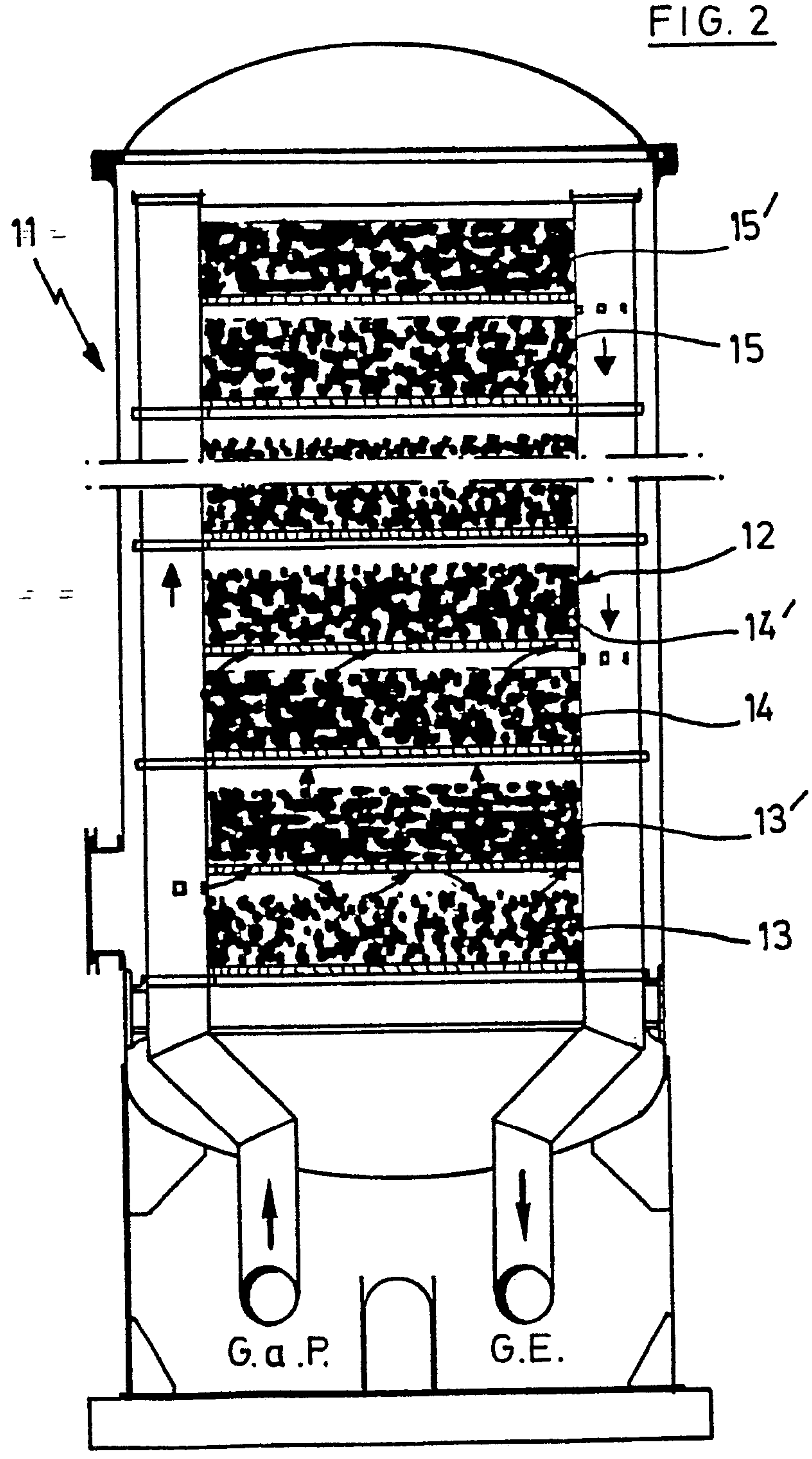

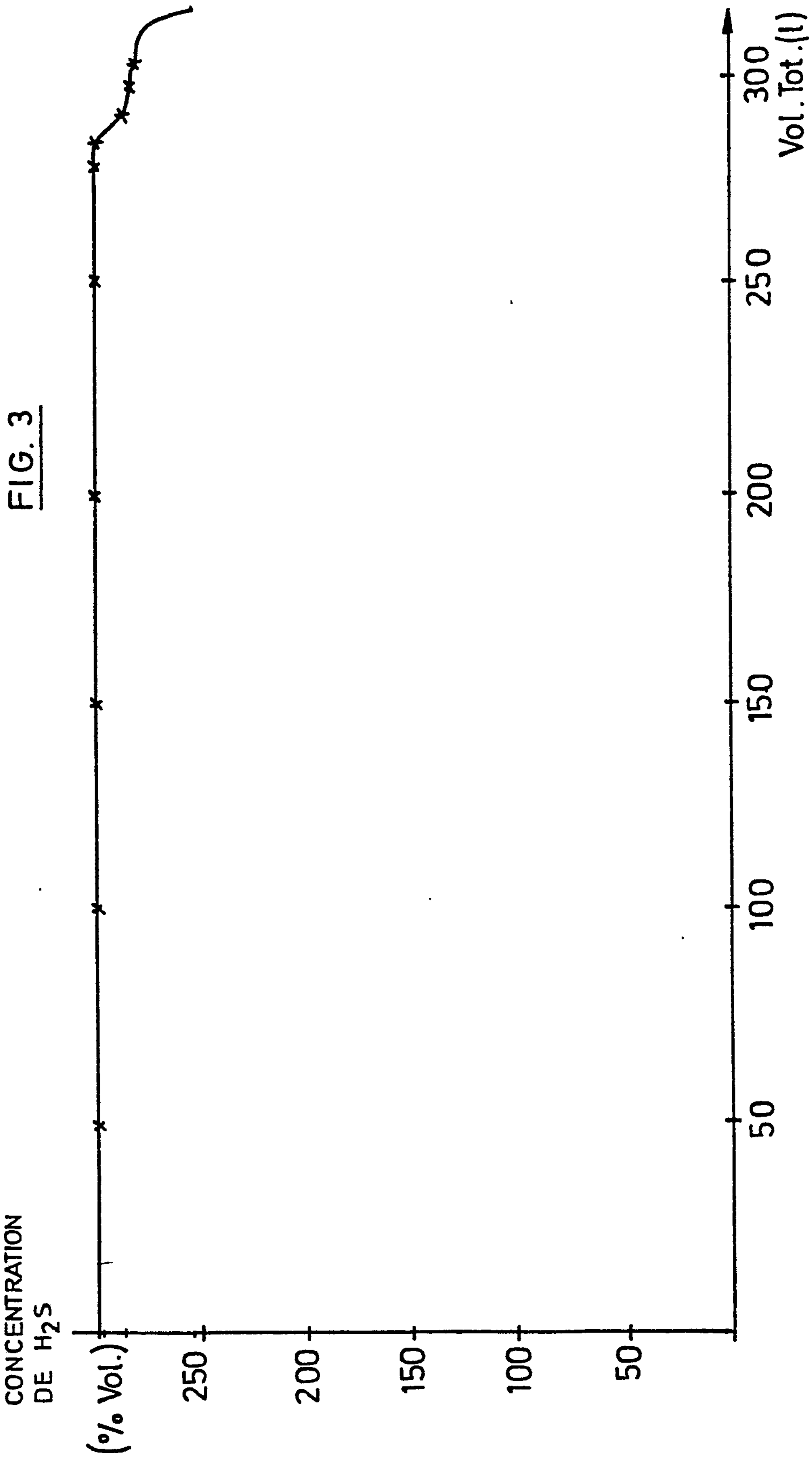
CONCENTRATION
DE $H_2S$
(% Vol.)
250
200
150
100
50
50
100
150
200
250
300
Vol. Tot. (l)

FIG. 3

FIG. 4

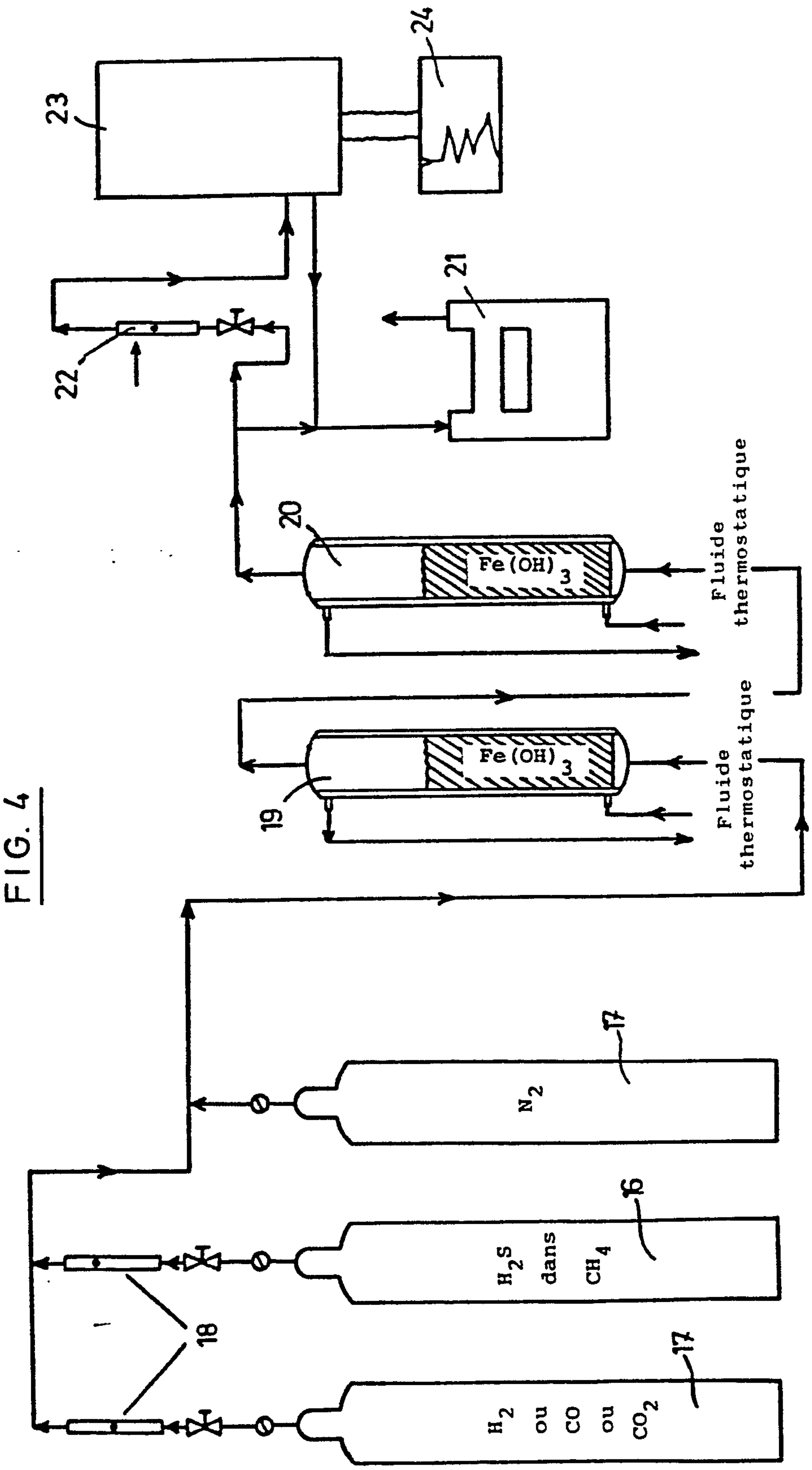
23
24
22
21
20
19
$Fe(OH)_3$
$Fe(OH)_3$
Fluide thermostatique
Fluide thermostatique
17
$N_2$
16
$H_2S$ dans $CH_4$
18
17
$H_2$ ou CO ou $CO_2$